**Europäisches Patentamt**

**European Patent Office**

**Office européen des brevets**

(19)

(11)     **EP 1 117 218 A1**

(12)                    **EUROPEAN PATENT APPLICATION**

| | |
|---|---|
| (43) Date of publication:<br>**18.07.2001   Bulletin 2001/29** | (51) Int Cl.[7]: **H04L 27/04**, H04L 25/03,<br>**H04L 27/20** |

(21) Application number: **00100597.4**

(22) Date of filing: **12.01.2000**

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI**<br><br>(71) Applicant: **ECOLE POLYTECHNIQUE FEDERALE<br>DE LAUSANNE (EPFL)<br>1015 Lausanne (CH)** | (72) Inventor: **Rimoldi, Bixio<br>1006 Lausanne (CH)**<br><br>(74) Representative: **Saam, Christophe<br>Patents & Technology Surveys SA<br>Faubourg du Lac 2<br>Case Postale 1448<br>2001 Neuchâtel (CH)** |

(54)     **Method for sending information signals over a communication channel, and corresponding encoder**

(57)     Pulse amplitude modulation scheme with the same spectral efficiency as QAM, that is twice the spectral efficiency of conventional PAM schemes, comprising the steps of:

(1) forming a train of pulses $q(t - k\frac{T}{2}) = p(t - k\frac{T}{2})cos2\pi f_0(t - k\frac{T}{2})$, wherein $p(t)$ is a Nyquist pulse for the symbol interval $T$ and wherein $f_0 = \frac{1}{T}(l+\frac{1}{2})$ for some positive integer $l$,
(2) modulating the amplitude of each of said pulses $q(t - k\frac{T}{2})$ with the value of the symbol $a_k$ in said stream,
(3) sending said train of amplitude modulated pulses over said communication channel.

$$q(t) = p(t) \cos 2\pi f_0 t \qquad f_0 T = \frac{1}{2}$$

Fig.7a

**Description**

TECHNICAL FIELD

The invention relates to the transmission of information signals, typically digital information signals, over a communication channel.

BACKGROUND OF THE INVENTION

Transmission channels such as, for example, telephone connections, digital broadcast channels, satellite links or optical fibers, all have inherent physical and/or regulatory restrictions that limit the available bandwidth. Even when the available bandwidth is broad, there is often a need for operating several communication channels over the same physical link, using multiplexing techniques such as, for example, frequency division multiplexing. Minimization of the frequency range assigned to individual channels may lead to an increase in the number of multiplexed channels, and thus to a significant economic advantage.

From the work of H. Nyquist it is well known that, in order to transmit symbols at a rate of $\frac{1}{T}$ per second, a bandwidth of at least $\frac{1}{2T}$ hertz is required. Moreover, efficient use of the bandwidth depends on a variety of implementation choices, in particular the modulation scheme.

Three popular modulation methods used for sending a stream of symbols $a_k$ over a communication channel are the PAM (Pulse Amplitude Modulation), QAM (Quadrature Amplitude Modulation) and OQAM (Offset QAM) techniques. The pulse amplitude modulation PAM is obtained by modulating the amplitude of a Nyquist pulse $p(t)$, i.e., a pulse verifying the two conditions:

$$1) \qquad p(t) = \begin{cases} 1 & for \quad t = 0 \\ 0 & for \quad t = kT \quad for\ each\ non\ zero\ Integer\ k \end{cases}$$

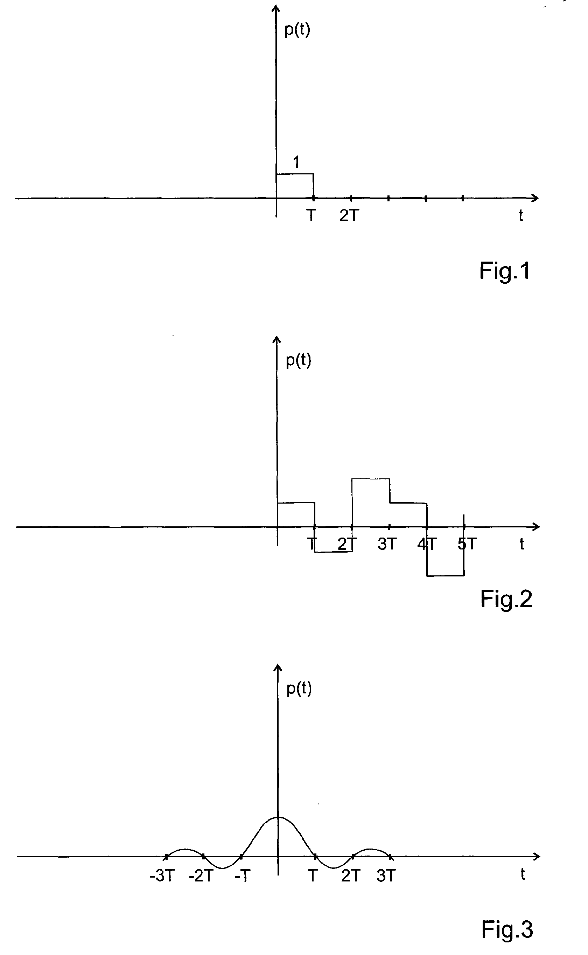

Figure 1 shows a simple example of a rectangular pulse $p(t)$ satisfying those conditions,

The baseband PAM signal $s(t)$ is obtained by multiplying each symbol to be encoded $a_k$ by a time-translated copy of $p(t)$:

$$s(t) = \sum_k a_k p(t - kT)$$

An example of signal $s(t)$ using the rectangular pulse $p(t)$ of figure 1 is shown in figure 2.

The rectangular pulse $p(t)$ shown in figure 1 satisfies the above mentioned Nyquist conditions, which means that two successive pulses $p(t)$ and $p(t+T)$ do not interfere. The bandwidth of this rectangular pulse is however very high, so that, in a band limited communication channel, one will usually prefer a Nyquist pulse with a narrower bandwidth. For instance, the pulse $p(t) = sin(\frac{t}{T})/(\frac{t}{T})$ shown in Figure 3 and whose frequency spectrum is shown in Figure 4 has a bandwidth of only $\frac{1}{2T}$ hertz. Other suitable pulses are shown in the US patent N° 2'719'189 (Benett et al.), the content of which is included by reference.

In order to transmit the modulated signal $s(t)$ in the desired frequency slot, it is necessary to up-convert it to the desired carrier frequency $f_0$, giving rise to the passband PAM signal

$$x_{PAM}(t) = \sum_k a_k p(t - kT) \cos 2\pi f_o t$$

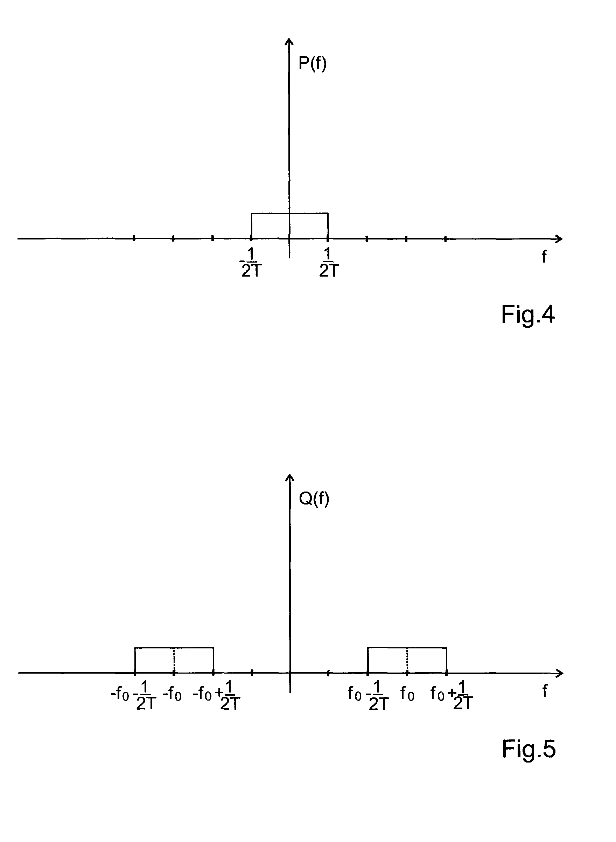

whose spectrum is shown in figure 5.

A similar alternative is to use the pulse

$$q(t) = p(t) \cos 2\pi f_0 t$$

which is also a Nyquist pulse for the symbol interval *T* and is already in passband, to obtain directly the passband PAM signal

$$\tilde{x}_{PAM}(t) = \sum_k a_k q(t - kT)$$

The spectral efficiency of the PAM signal is, at most, 1, which means that we have to allocate one hertz of bandwidth for transmitting one symbol every second.

The above mentioned US patent N° 2'719'189 (Benett et al.) suggests a method for doubling this spectral efficiency by employing a particular numerical relation between the symbol rate and the modulation frequency. A modulated signal of a particular form is generated, in which it is possible to find supplementary zeroes. This patent thus suggests that a second modulated signal of similar wave form be added to the first signal and that the phase relation between the first signal and the second signal be controlled so that the peaks of one signal coincide with the supplementary zeroes of the other signal. In effect, two pulse trains of like frequency may be intermingled to form a composite train whose two components may be disentangled one from the other at a receiver station for demodulation.

This method hence permits to achieve a spectral efficiency of 2 symbols/hertz/second. The implementation however requires two modulators for modulating the two signals. Furthermore, the two modulators have to be perfectly time synchronized, which may be very difficult to achieve at high data rates.

A popular alternative to PAM for improving the spectral efficiency is the QAM technique. QAM is obtained by overlapping two PAM-type signals, one up-converted using $cos(2\pi f_0 t)$ and the other up-converted using $sin(2\pi f_0 t)$. The two PAM-type signals are called the in-phase P and the quadrature Q component, respectively. As the two components are orthogonal, they can be decoded independently, thus doubling the spectral efficiency. The result is:

$$x_{QAM}(t) = \sum_k a_{2k} p(t - kT) \cos 2\pi\, f_o t + \sum_k a_{2k+1} p(t - kT) \sin 2\pi\, f_o t$$

A minor twist of QAM leads to Offset QAM (OQAM), which is obtained by delaying by $\frac{T}{2}$ one of the two signal components. The result is

$$x_{OQAM}(t) = \sum_k a_{2k} p(t - kT) \cos 2\pi\, f_o t + \sum_k a_{2k+1} p\left(t - \frac{T}{2} - kT\right) \sin 2\pi\, f_o t$$

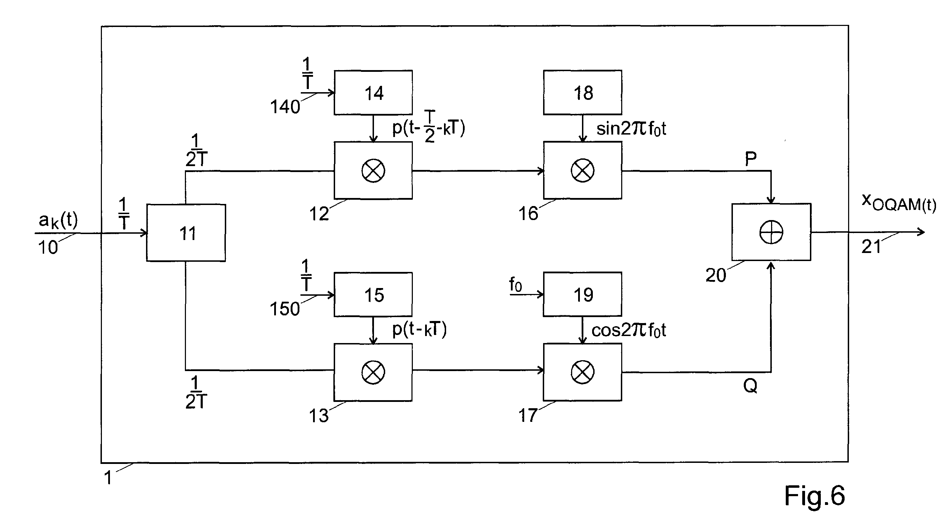

An encoder 1 for encoding a signal $a_k(t)$ according to the OQAM modulation scheme is shown in figure 6. The encoder comprises a serial to parallel converter 11 for delivering each odd symbol $a_1$, $a_3$, $a_5$, ... in the stream of symbols $a_k$ to a first multiplier 12, and each even symbol $a_2$, $a_4$, $a_6$, ... to a second multiplier 13. A first pulse generator 14 delivers a first train of time delayed Nyquist pulses $p(t - \frac{T}{2} - kT)$ to the first multiplier 12 at times $t = \frac{T}{2} + kT$, and a second pulse generator 15 delivers a second train of time delayed Nyquist pulses $p(t-kT)$ to the second multiplier 13 at times $t=kT$. The pulse generators are synchronized with clock signals 140 and 150 with a frequency $\frac{1}{T}$.

At each time $t = \frac{T}{2} + kT$, the first multiplier 12 multiplies the pulse $p(t - \frac{T}{2} - kT)$ with the symbol $a_{2k+1}$ received at that time from the serial to parallel converter 11. The result is delivered to a first modulator 16 which up-converts it to the carrier frequency $f_0$, using a sinusoidal function $sin2\pi f_0 t$ delivered by a sinus generator 18.

Similarly, at each time $t=kT$, the second multiplier 13 multiplies the pulse $p(t-kT)$ with the symbol $a_{2k}$ received at that time from the serial to parallel converter 11. The result is delivered to a second modulator 17 which up-converts it to the carrier frequency $f_0$, using a cosinusoidal function $cos2\pi f_0 t$ delivered by a second sinus generator 18.

The in-phase and the quadrature components P, Q delivered by the modulators 16 and 17 are added by an adder 20 to obtain the OQAM signal 21 $X_{OQAM}(t)$. As a pulse with a bandwidth $\frac{1}{T}$ is transmitted each $\frac{T}{2}$ second, the maximal spectral efficiency of the OQAM signal is 2 symbols/Hz/sec, i.e., twice that of a PAM signal.

However, implementing the QAM or the OQAM modulation method is costly, mainly because the encoder 1 has to use two multipliers 12, 13 and two modulators 16, 17. Furthermore, the in-phase component P and the quadrature component Q have to be time synchronized, amplitude balanced and in phase quadrature both at the encoder 1 (in the transmitter) and at the decoder (in the receiver). This becomes very difficult at high data rates.

It is a purpose of the invention to provide a new and improved method for sending a digital signal, particularly a new modulating method which avoids the drawbacks of the prior art, without degrading the spectral efficiency.

It is another purpose of the invention to provide a new and improved method for sending a digital signal with the best theoretically achievable spectral efficiency without recurring to a parallel implementation as for the Benett, QAM or OQAM modulation scheme.

SUMMARY OF THE INVENTION

The present invention is based on the discovery of a new Nyquist pulse $q(t)$ which has the same bandwidth as the Nyquist pulse $p(t)$ but with a Nyquist interval of only $\frac{T}{2}$.

Moreover, the present invention is based on the discovery that by multiplying the original pulse $p(t)$ with $\cos 2\pi f_0 t$, and by employing a particular numerical relation which holds between the symbol interval $T$ and the frequency $f_0$, a frequency translated pulse $q(t)$ is generated which is centered at $f_0$. The new pulse $q(t)$ is already in passband and presents a supplementary zero inside each Nyquist interval. Those supplementary zeroes are used for locating another pulse, of similar wave form, with a peak coinciding with this intermediate zero. Hence the two pulses do not interfere at times $t = k\frac{T}{2}$, so that the symbol rate may be doubled without any supplementary interpulse interference.

According to the invention, the supplementary zeroes are located in the middle of Nyquist intervals. This allows to modulate the first pulse and the second pulse by the same modulator with data values from the same data stream, so that the modulator may be serially implemented. It thus avoids the drawbacks of prior art modulators using a parallel implementation, i.e., the use of two modulators and the synchronization between the two modulators.

According to another aspect, the invention is a method for sending a signal corresponding to a stream of symbols $(a_k)$ over a communication channel, comprising the steps of:

(1) forming a train of pulses $q(t-k\frac{T}{2}) = p(t-k\frac{T}{2})\cos 2\pi f_0(t-k\frac{T}{2})$, wherein $p(t)$ is a Nyquist pulse for the symbol interval $T$ and wherein $f_0 = \frac{1}{T}(I+\frac{1}{2})$ for some positive integer $I$,
(2) modulating the amplitude of each of said pulses $q(t - k\frac{T}{2})$ with the value of the symbol $a_k$ in said stream,
(3) sending said train of amplitude modulated pulses over said communication channel.

As a result, the modulated signal carries two symbols every T seconds. With the pulse $p(t)$ shown on Figure 3, it is possible to carry two symbols every $T$ seconds for each hertz of bandwidth. Hence the spectral efficiency of the modulated signal is that of QAM. The modulator can however be serially implemented, thus avoiding the drawbacks of the QAM modulation scheme.

BRIEF DESCRIPTION OF THE DRAWINGS

Fig. 1 is a diagram of amplitude versus time for a rectangular Nyquist pulse $p(t)$.
Fig. 2 is a diagram of amplitude versus time for a pulse amplitude modulated signal using the pulse of Fig. 1.
Fig. 3 is a diagram of amplitude versus time for a more efficient Nyquist pulse $p(t)$.
Fig. 4 is a diagram of amplitude versus frequency for the more efficient Nyquist pulse $p(t)$ of Fig. 3.
Fig. 5 is a diagram of amplitude versus frequency for the up-converted Nyquist pulse $p(t)$ of Fig. 3, with a carrier frequency $f_0$.
Fig. 6 schematically shows the components of a known OQAM-Modulating System.

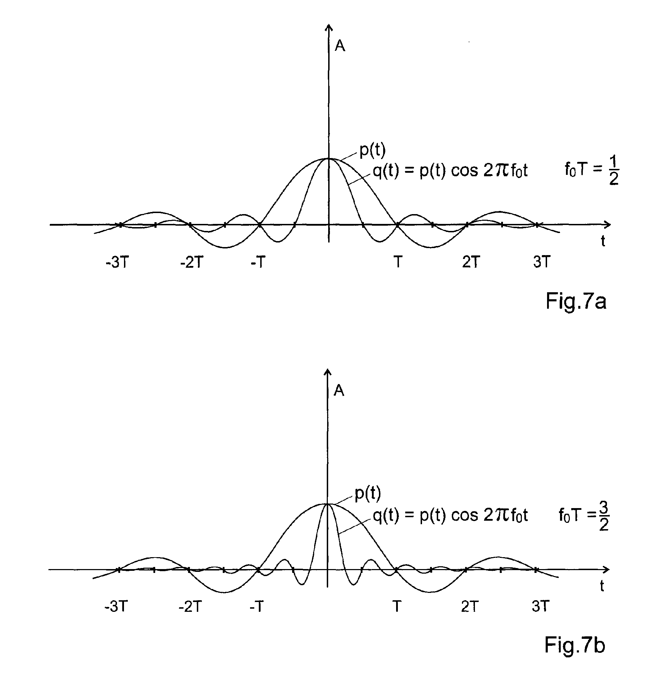

Fig. 7a is a diagram of amplitude versus time for a Nyquist pulse $p(t)$ used in the modulation system of the invention, with a factor $I=0$.
Fig. 7b is a diagram of amplitude versus time for a Nyquist pulse $p(t)$ used in the modulation system of the invention, with a factor $I=1$.

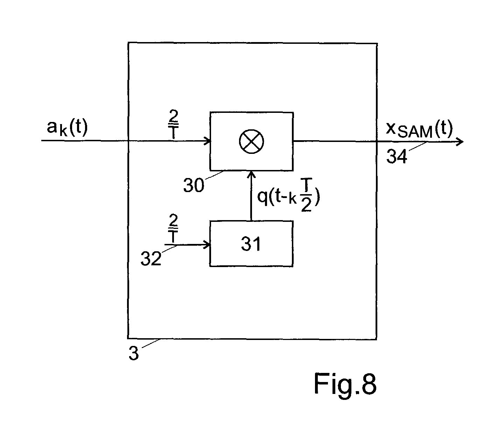

Fig. 8 schematically shows the components of a modulator according to the invention.

DETAILED DESCRIPTION

We start with an arbitrary Nyquist pulse $p(t)$ for the symbol interval T, i.e., a pulse satisfying the two conditions (1), and choose an arbitrary carrier frequency $f_0$ such that

$$f_o T = I + \frac{1}{2} \text{ for some Integer} I$$

It can be easily verified that when this relation between $T$ and $f_0$ holds, the above defined pulse $q(t) = p(t) \cos 2\pi f_0 t$ verifies the conditions

$$q(t) = \begin{cases} 1 & for \quad t = 0 \\ 0 & for \quad t = k\dfrac{T}{2} \quad for\ each\ non\ zero\ Integer\ k \end{cases}$$

In other words, $q(t)$ is a Nyquist pulse for the symbol interval $\frac{T}{2}$.

The figure 7a is a diagram of amplitude versus time of the pulse $q(t)$, obtained from the pulse $p(t)$ shown in figure 3 and with a parameter $l=0$, i.e. with $f_0 T = \frac{1}{2}$. The figure 7b shows the pulse $q(t)$ with a parameter $l=1$, i.e. with $f_0 T = \frac{3}{2}$. It can be verified that $q(t) = 0$ for $t = k\frac{T}{2}$ for each integer $k \neq 0$. It is thus possible to send a pulse $q(t - k\frac{T}{2})$ at each Nyquist interval of length $\frac{T}{2}$ and still recover the information symbols $a_k$ by sampling the resulting pulse train at times $t = k\frac{T}{2}$. This fact allows us to transmit at twice the symbol rate by means of the passband signal

$$x_{SAM}(t) = \sum_k a_k q(t - k\frac{T}{2})$$

This signal has the same bandwidth as $x_{PAM}(t)$ but carries two symbols every $T$ second. Hence its spectral efficiency is that of QAM.

The implementation of a serially implemented encoder (pulse amplitude modulator) 3 using this modulation scheme is shown in figure 8. The encoder comprises a multiplier 30 for multiplying each symbol to be modulated $a_k$ with an elementary pulse $q(t)$. The elementary pulse $q(t)$ is delivered by a pulse generator 31 synchronized with a clock signal 32 at a frequency $\frac{2}{T}$. The pulse generator 31 delivers a pulse $q(t) = p(t)cos2\pi f_0 t$ every $\frac{T}{2}$ second, wherein $p(t)$ is a Nyquist pulse for the symbol interval $T$ and wherein the relation $f_0 = \frac{1}{T}(l+\frac{1}{2})$ is true for some positive integer $l$. The clock signal 32 and the data rate of the stream $a_k$ is controlled by a sequencer (not shown), comprising for example a quartz oscillator.

The signal $x_{SAM}(t)$ outputted by the multiplier 30, which is already in passband, can directly be transmitted over a communication channel. In most cases, however, a second multiplier (not shown) will up-convert the signal $x_{SAM}$ from the intermediate frequency $f_0$ to the desired slot at a higher frequency.

The demodulation in the receiver can be achieved with any known PAM-demodulator designed for the pulse $q(t)$. For example, the demodulator may sample the received signal at times $t = k\frac{T}{2}$ in order to derive the values of $a_k$.

One advantage of this new modulation scheme with respect to the above mentioned prior art schemes which achieve the same spectral efficiency is that the modulator and the demodulator can both be serially implemented, thus avoiding the synchronization problem between the components of the parallel branches of a QAM modulation system.

The one skilled in the art will understand that the modulator and/or the demodulator can be implemented with hardware components or with a combination of software and hardware components (software radio). In this latter case, the invention concerns a program storage device, for example a floppy disk, a hard disk, an optical disk etc., readable by a machine, for example a microprocessor or a microcontroler, and tangibly embodying a program of instructions executable by the machine to perform method steps for modulating a digital signal with the inventive modulation method.

Moreover, the one skilled in the art will understand that instead of using a "real" Nyquist pulse $p(t)$ in the encoder, for instance a raised cosine pulse, it is also possible to choose an elementary pulse $p(t)$, for instance a root raised cosine pulse, which will be converted in a Nyquist pulse by the transfer function $H(f)$ of the communication channel and of the matching filter in the receiver. In this description and in the claims, a Nyquist pulse designates any pulse which satisfies the conditions (1) or which can be converted in a Nyquist pulse by the transfer function $H(f)$ of the communication channel and of the matching filter in the receiver.

**Claims**

1. Method for sending a signal corresponding to a stream of symbols ($a_k$) over a communication channel, comprising the steps of:

  (1) forming a train of pulses $q(t-k\frac{T}{2})=p(t-k\frac{T}{2})cos2\pi f_0(t-k\frac{T}{2})$, wherein $p(t)$ is a Nyquist pulse for the symbol interval $T$ and wherein $f_0 = \frac{1}{T}(l+\frac{1}{2})$ for some positive integer $l$,
  (2) modulating the amplitude of each of said pulses $q(t - k\frac{T}{2})$ with the value of the symbol $a_k$ in said stream,
  (3) sending said train of amplitude modulated pulses over said communication channel.

2. Method according to claim 1, wherein $f_0$ is an intermediate frequency, and further comprising the step of modulating said train of amplitude modulated pulses with a higher frequency.

3. Method according to one of the preceding claims, wherein $p(t)$ is a raised cosine pulse.

4. Method according to one of the claims 1 or 2, wherein $p(t)$ is a root raised cosine pulse.

5. Method according to one of the preceding claims, wherein each said symbol $(a_k)$ can take a plurality of discrete values.

6. Method according to one of the claims 1 to 4, wherein each said symbol $(a_k)$ can take a plurality of continuous values.

7. Pulse amplitude modulator (2), comprising a multiplier (30) for multiplying each symbol to be modulated $(a_k)$ with an elementary pulse $q(t - k\frac{T}{2}) = p(t - k\frac{T}{2})cos2\pi f_0(t - k\frac{T}{2})$, wherein $p(t)$ is a Nyquist pulse $p(t)$ for the symbol interval $T$ and wherein $f_0 = \frac{1}{T}(l+\frac{1}{2})$ for some positive integer $l$.

8. Pulse amplitude modulator according to claim 7, further comprising sequencing means (32) for delivering a new pulse $q(t - k\frac{T}{2})$ and a new symbol $(a_k)$ to said multiplier at a symbole rate $\frac{2}{T}$.

9. Pulse amplitude modulator according to one of the claims 7 or 8, wherein $f_0$ is an intermediate frequency, and further comprising a second modulator for modulating said train of amplitude modulated pulses with a higher frequency.

10. Pulse amplitude modulator according to one of the claims 7 to 9, wherein $p(t)$ is a raised cosine pulse.

11. Pulse amplitude modulator according to one of the claims 7 to 9, wherein $p(t)$ is a root raised cosine pulse.

12. Pulse amplitude modulator according to one of the claims 7 to 11, wherein each said symbol $(a_k)$ can take a plurality of discrete values.

13. Pulse amplitude modulator according to one of the claims 7 to 11, wherein each said symbol $(a_k)$ can take a plurality of continuous values.

14. Program storage device readable by a machine (2), tangibly embodying a program of instructions executable by the machine to perform method steps for modulating a signal, said method steps comprising:

(1) forming a train of pulses $q(t-k\frac{T}{2})= p(t-k\frac{T}{2})cos2\pi f_0(t-k\frac{T}{2})$, wherein $p(t)$ is a Nyquist pulse for the symbol interval $T$ and wherein $f_0 = \frac{1}{T}(l+\frac{1}{2})$ for some positive integer $l$,
(2) modulating the amplitude of each of said pulses $q(t - k\frac{T}{2})$ with the value of the symbol $a_k$ in said stream, 2
(3) sending said train of amplitude modulated pulses over said communication channel.

15. Program storage device according to claim 14, wherein $p(t)$ is a raised cosine pulse.

16. Program storage device according to claim 14, wherein $p(t)$ is a root raised cosine pulse.

17. Program storage device according to one of the claims 14 to 16, wherein each of said symbols $(a_k)$ can take a plurality of discrete values.

18. Program storage device according to one of the claims 14 to 17, wherein $f_0$, $T$ and $l$ are variable parameters that may be changed by the user.

19. Pulse generator (31) for generating a train of pulses $q(t-k\frac{T}{2}) = p(t-k\frac{T}{2}) = p(t - k\frac{T}{2})cos2\pi f_0(t - k\frac{T}{2})$ wherein $p(t)$ is a Nyquist pulse for the symbol interval $T$ and wherein $f_0 = \frac{1}{T}(l + \frac{1}{2})$ for some positive integer $l$.

Fig.1

Fig.2

Fig.3

P(f)

$-\dfrac{1}{2T}$        $\dfrac{1}{2T}$        f

Fig.4

Q(f)

$-f_0-\dfrac{1}{2T}$  $-f_0$  $-f_0+\dfrac{1}{2T}$        $f_0-\dfrac{1}{2T}$  $f_0$  $f_0+\dfrac{1}{2T}$        f

Fig.5

Fig.6

$$p(t)$$
$$q(t) = p(t) \cos 2\pi f_0 t \qquad f_0 T = \frac{1}{2}$$

-3T    -2T    -T    T    2T    3T

Fig.7a

$$p(t)$$
$$q(t) = p(t) \cos 2\pi f_0 t \qquad f_0 T = \frac{3}{2}$$

-3T    -2T    -T    T    2T    3T

Fig.7b

Fig.8

EP 1 117 218 A1

| European Patent Office | EUROPEAN SEARCH REPORT | Application Number EP 00 10 0597 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SUNDE E D: "THEORETICAL FUNDAMENTALS OF PULSE TRANSMISSION I" BELL SYSTEM TECHNICAL JOURNAL, AMERICAN TELEPHONE AND TELEGRAPH CO., vol. 33, no. 3, May 1954 (1954-05), pages 721-788, XP000761003 New York, USA * page 746, last paragraph - page 747 * | 1-19 | H04L27/04 H04L25/03 H04L27/20 |
| A | KOK I A: "SYNTHESIS AND ANALYSIS OF SYNCHRONOUS DATA SIGNALS REALIZED BY MEANS OF TRANSVERSAL FILTERS" PTT-BEDRIJF, vol. 17, no. 1, August 1970 (1970-08), pages 8-23, XP000763856 The Hague, The Netherlands ISSN: 0030-8366 * page 8, right-hand column, second paragraph * * section 2 * | 1-19 | |
| A,D | US 2 719 189 A (BENNETT W R ET AL) 27 September 1955 (1955-09-27) * column 2, line 32 - line 55 * | 1-19 | **TECHNICAL FIELDS SEARCHED (Int.Cl.7)** H04L |
| A | US 4 003 002 A (SNIJDERS W A M ET AL) 11 January 1977 (1977-01-11) * figure 1 * | 1-19 | |

The present search report has been drawn up for all claims

| Place of search | Date of completion of the search | Examiner |
|---|---|---|
| THE HAGUE | 14 June 2000 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

EP 00 10 0597

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2000

| Patent document cited in search report | | Publication date | Patent family member(s) | | Publication date |
|---|---|---|---|---|---|
| US 2719189 | A | 27-09-1955 | NONE | | |
| US 4003002 | A | 11-01-1977 | NL | 7412095 A | 16-03-1976 |
| | | | AU | 496789 B | 26-10-1978 |
| | | | AU | 8460775 A | 17-03-1977 |
| | | | BE | 833281 A | 10-03-1976 |
| | | | CA | 1063178 A | 25-09-1979 |
| | | | DE | 2540473 A | 01-04-1976 |
| | | | FR | 2285032 A | 09-04-1976 |
| | | | IT | 1042394 B | 30-01-1980 |
| | | | JP | 1014380 C | 25-09-1980 |
| | | | JP | 51053444 A | 11-05-1976 |
| | | | JP | 55005942 B | 12-02-1980 |
| | | | SE | 404118 B | 18-09-1978 |
| | | | SE | 7509996 A | 15-03-1976 |

EPO FORM P0459

For more details about this annex : see Official Journal of the European Patent Office, No. 12/82